# EUROPÄISCHE PATENTSCHRIFT

(11) **EP 2 704 887 B1**
(45) Veröffentlichungstag und Bekanntmachung des Hinweises auf die Patenterteilung: **15.02.2017**
(21) Anmeldenummer: 12713881.6
(22) Anmeldetag: 30.03.2012
(51) Int. Cl.: B29B 11/16, B29C 70/56, B29C 70/54, B29C 70/20

(54) **VERFAHREN UND VORRICHTUNG ZUM HERSTELLEN VON FASERGELEGEN UND BAUTEILVORFORMLINGEN AUS FASERN**
METHOD AND APPARATUS FOR PRODUCING LAID FIBRE FABRICS AND COMPONENT PREFORMS MADE OF FIBRES
PROCÉDÉ ET DISPOSITIF POUR LA FABRICATION DE NON-TISSÉS EN FIBRES ET DE PRÉFORMES DE PIÈCES EN FIBRES

(30) Priorität: 05.05.2011 DE 102011100640
(43) Veröffentlichungstag der Anmeldung: 12.03.2014
(73) Patentinhaber: Compositence GmbH, 71229 Leonberg (DE)
(72) Erfinder: KARB, Ingo, 71229 Leonberg (DE); WITZEL, Volker, 74369 Löchgau (DE)
(74) Vertreter: Kramer Barske Schmidtchen Patentanwälte PartG mbB
(86) Internationale Anmeldenummer: PCT/EP2012/001422
(87) Internationale Veröffentlichungsnummer: WO 2012/149990

(56) Entgegenhaltungen:
- WO-A1-2012/035105
- DE-A1- 19 922 799
- US-A- 4 432 716
- US-B1- 6 585 842

## Beschreibung

Die Erfindung betrifft Verfahren und Vorrichtungen zum Herstellen von Fasergelegen und Bauteilvorformlingen aus Fasern, insbesondere mittels Rahmen mit elastischer Faseraufspannung.

Bauteile aus Faserverbundwerkstoffen werden heute zumeist aus mehreren Lagen von flächigen Halbzeugen wie Geweben oder Fasergelegen hergestellt. Die Gelege können dabei trocken (Preform-Technologie) oder mit Matrixharz infiltriert sein (Prepreg-Technologie). Die Halbzeuge werden dabei aus einzelnen Fäden von Verstärkungsfasern wie z.B. aus Rovings hergestellt. Für die Herstellung von Bauteilen werden aus solchen Halbzeugen Zuschnitte erzeugt, die dann - meist manuell - auf eine der Bauteilgeometrie entsprechende Positivform oder Negativform aufgelegt werden. Die Zuschnitte werden einzeln oder in Stapeln über die Form gebracht und - oft in einem manuellen Prozess - in die Bauteilform drappiert. Für komplexe Formen von Bauteilen mit hohem Tiefziehverhältnis werden Schnitte und Überlappungen im Halbzeug benötigt, da die Dehn- und Scherbarkeit der Halbzeuge beschränkt ist.

Nachteilig an diesen Verfahren sind:
- Verwendung teurer Halbzeuge (Wertschöpfungsstufe, Lagerhaltung unterschiedlichster Halbzeuge, Kühlung und Verfallsdatum bei Prepregs)
- Zuschnitt und zwischen 30% und 70% Abfall (Verschnitt)
- Schwierige und Qualitätskritische Handhabung von biegeschlaffen Einzelzuschnitten
- Formgebung von Halbzeugen beschränkt
- Viele manuelle Prozessschritte
- Lange Prozessdauer, hohe Materialkosten, geringe Reproduzierbarkeit

Die DE 199 22 799 A1 offenbart ein Verfahren zur Herstellung eines Kunststoffformteils und eine Vorrichtung zur Durchführung des Verfahrens, bei dem Fasermaterial zur Ausbildung eines Vorformlings mittels eines Spannrahmens vorgespannt wird und mit einem Drapierwerkzeug vorgeformt wird. Das Fasermaterial ist ein Halbzeug, das als Rollenmaterial von Rollen abgezogen und in dem Spannrahmen gespannt wird.

Die US 6,585,842 B1 und die US 4,432,716 offenbaren Verfahren und Vorrichtungen zur Herstellung von Fasern enthaltenden Produkten.

Die vier nachveröffentlichten WO 2012/136 391 A1 bis WO 2012/136394 A1 offenbaren Verfahren und Vorrichtungen zur Herstellung von Vorformlingen aus Fasern, bei denen Fasergarne oder Rovings von Spulen zugeführt und mittels Greifern gehalten werden, während ein Formwerkzeug zum Drapieren verwendet wird. Spannrahmen werden nicht offenbart. Die Garnspannungen können beim Drapieren geregelt werden, wobei diese Regelung auf der Seite der Spulen erfolgt.

Aufgabe der Erfindung ist es, eine Vorrichtung und ein Verfahren zum Herstellen von Gelegen und Bauteilvorformlingen aus Fasern anzugeben, dass diese Nachteile wenigstens teilweise überwindet.

Diese Aufgabe wird gelöst durch ein Verfahren nach Anspruch 1 bzw. eine Vorrichtung nach Anspruch 6. Weiterbildungen der Erfindung sind in den abhängigen Ansprüchen angegeben.

Ermöglicht werden unter anderem ein Verfahren und eine Vorrichtung zur automatisierten Herstellung von trockenen Vorformlingen (Preforms) und von Vorformlingen mit integriertem Matrixmaterial (PreStacks, z.B. Prepregs) für Bauteile aus Faserverbundwerkstoffen mit zweidimensionaler (ebener) Erstreckung (2D) wie Platten oder mit dreidimensionaler (nicht-ebener) Erstreckung (3D) auch mit komplizierter Geometrie wie Griffen, Karosserieteilen, etc. Vorformlinge sind dabei Formteile in bauteilähnlicher Geometrie aus Verstärkungsfasern und gegebenenfalls Hilfsstoffen für die Weiterverarbeitung. Vorformlinge, also sowohl trockene Vorformlinge als auch PreStacks können dabei in Handhabungstaschen aus Folien oder Kunststoffformteilen verpackt sein.

Zur Belegung einer ebenen oder dreidimensionalen Bauteilform wird eine Mehrzahl von Fäden, vorzugsweise Rovings, mittels einer Vorrichtung zum elastischen Aufspannen der Fäden in einer Spannebene, insbesondere mittels eines Rahmens mit elastischer Fadenaufspannung, gehalten. Dabei werden die Fäden vorzugsweise lateral beidseitig der Spannebene elastisch gehalten, wobei auf wenigstens einer Seite zusätzliche Länge des Fadens nachlieferbar ist. Die Fäden verlaufen in der Spannebene, z.B. in dem Rahmen, geradlinig von einer Seite zur gegenüberliegenden Seite. Die Fäden können die Fläche der Aufspannebene vollständig bedecken, indem die Fäden lückenfrei nebeneinander in der Aufspannebene, also z.B. dem Rahmen, liegen.

Ein Werkstückträger in Form eines Formwerkzeugs ("Positiv-Werkzeug") mit der Geometrie des Bauteils oder einer geeigneten Vorgeometrie wird im Wesentlichen senkrecht durch die Aufspannebene, also z. B. von oben oder unten durch den Rahmen, geschoben (oder die Spannebene bzw. der Rahmen über das Werkzeug bewegt, also relativ zueineander). Dadurch werden die in der Spannebene (im Rahmen) befindlichen Fäden über die Werkzeugform gespannt. Aus der entgegengesetzten Richtung kann ein zweites Formwerkzeug ("Negativ-Werkzeug) die Ausbildung der Formung des Fasergeleges unterstützen. Die Fäden werden dabei nachgiebig (also z.B. elastisch oder mittels Rutsch o.ä.) in der Spannebene, also z.B. dem Spannrahmen, gehalten, so dass der Bedarf an zusätzlicher Fadenlänge durch die Relativbewegung von Werkstückträger und Spannebene und eventueller Bewegung des weiteren Formwerkzeugs und das resultierende Belegen des Werkstückträgers etc. beim Tiefziehen von 3D-Formen aus der Reservelänge des Fadens durch das elastische Halten gedeckt werden kann. Dabei wird vorzugsweise jeder Faden separat nachgiebig gehalten, noch bevorzugter auf beiden lateralen Seiten der Spannebene.

Es kann mit einer oder mehreren Spannebenen gearbeitet werden. Mehrere Spannebenen werden dabei vorzugsweise mittels einer oder mehrerer Rahmen übereinander realisiert. Ein in der Draufsicht quadratischer oder rechteckiger Rahmen kann z.B. eine oder zwei Spannebenen mit jeweils parallel nebeneinander aufgespannten Faserscharen halten, ein sechseckiger Rahmen drei solche Spannebenen, usw. Mehrere Spannebenen können auch mit mehreren Rahmen realisiert werden, die in einer im Wesentlichen zu den Spannebenen senkrechten Richtung übereinander angeordnet sind. Derart können mehrere Fadenlagen gleichzeitig und mit entsprechender Orientierung der Fäden erzeugt bzw. auf den Werkstückträger aufgebracht werden. Dabei können die Faserorientierungen in allen Rahmen unterschiedlich sein, so dass ein Kreuzverbund entsteht. Durch entsprechende Konstruktion der Rahmen bzw. unter Verwendung von zwei Hilfsrahmen können die Fäden aller Lagen bei Bedarf in Kontakt gebracht werden, so dass sie sich beim Ablegen und/oder Tiefziehen wie eine einzige Lage verhalten und z.B. gleichzeitig in Kontakt mit dem Positiv-Werkzeug gebracht werden.

Das Aufbringen der Fäden erfolgt dabei so, dass nur minimal mehr Fadenlänge nachgiebig, also z.B. im Rahmen, gehalten wird, als für die Bedeckung der Bauteilform benötigt wird.

Bevorzugt werden dazu die Rahmen so an die Bauteilkontur angepasst, dass die Haltestellen in jedem Rahmen nahe an der Bauteilkontur liegen. Alternativ können anstelle der Rahmen die Haltestellen einstellbar sein.

Bevorzugt werden Aufspannen und Ablegen wie folgt ausgeführt. An den Haltestellen auf einer lateralen Seite der Aufspannebene, also bevorzugt einer lateralen Rahmenseite (Einführseite), werden die Fäden von Fadenspulen herangeführt und bereitgehalten. Die Fadenenden werden z.B. mit Hilfe von Greifern von einer Haltestelle auf der Einführseite zu einer Haltestelle auf der gegenüberliegenden lateralen Seite der Aufspannebene, also bevorzugt der gegenüberliegenden lateralen Rahmenseite (Einführseite) transportiert (z.B. gezogen). Auf der Zielseite ist die Haltestelle bzw. die Positionierung des Greifers so gewählt, dass eine individuelle Fadenreserve (zusätzliche Fadenlänge) bereitgehalten wird. Diese Fadenreserve entspricht der Länge, um die der Faden bei der Anpassung an die Kontur des Bauteils bzw. Werkstückträgers aus der Spannebene (der Rahmenebene) gezogen werden. Also z.B. beim Durchtauchen des Formwerkzeugs durch den Rahmen können die Fäden an der Einführseite direkt von den Spulen nachgezogen werden, während an der Zielseite die benötigte zusätzliche Fadenlänge aus dieser Reserve gezogen werden kann.

Nach abgeschlossenem Formungsvorgang werden die Fäden auf der Einführseite abgetrennt und auf der Zielseite an den Haltestellen freigegeben.

Die in einem Formungsschritt geformten Lagen werden in einem der beiden Formwerkzeuge gehalten (z.B. mittels Vakuum, Nadeln, Adhäsivstoffen, Greifern, Klemmen, Gefriergreifern) und die beiden Formwerkzeuge können getrennt werden und fahren auf in ihre Ausgangspositionen zurück.

Der Begriff "Fäden" bezeichnet hier allgemein Rovings aus Verstärkungsfasern einschließlich sogenannter Heavy Tows. Matrix- oder Hilfsfasern aus z.B. Kohlenstoff, Glas, Aramid, Basalt oder anderen Materialien, Folienstreifen oder Streifen von Hilfsmaterialien können zusätzlich verarbeitet werden.

Varianten und spezielle Ausführungsformen:
- Belegung der Spannebene (des Rahmen) vollflächig oder teilweise (z.B. ein Streifen nur in der Mitte oder an den Rändern);
- Nachgiebiges Halten der Fäden am Rand der Spannebene (Rahmenrand) - elastisch (Feder, Pneumatik) oder kraftgesteuert (Rutschen in Klemmung, Führen über gebremste Rolle, Gewicht);
- Zeitgleiches oder zeitlich gestaffeltes Aufbringen der Fäden in die Spannebene(n) bzw. auf den/die Rahmen;
- Positiv Werkzeug kann fest oder in Teilen elastisch oder mehrteilig sein;
- Negativ Werkzeug kann fest oder voll- bzw. in Teilen elastisch oder auch mehrteilig sein;
- Werkzeugantriebe können mechanisch oder pneumatisch oder hydraulisch sein. (Stempel, Membranen...);

- Die einzelnen festen und elastischen Teile von Positiv- und Negativ-Werkzeug können unabhängig gesteuert und zeitlich gestaffelt bewegt werden;
- Die Bewegung von Positiv- und Negativ-Werkzeug zur Spannebene bzw. zum Rahmen kann geradlinig oder auf gekrümmten Bahnen mit und ohne zusätzliche Rotation erfolgen (z.B. Abwälzbewegung beim Eintauchen in den Rahmen);
- Positiv- und Negativ-Werkzeug können beheizt werden und Druck auf die Fasergelege ausüben (z.B. zur Kompaktierung, Aktivierung von Bindern und Konsolidierung des Vorformlings);
- Zwischen den Lagen können zusätzliche Materialien wie Polymerfäden, Polymerfolien, Netze eingebracht werden (z.B. analog zu den Verstärkungsfaserfäden), um Umformung und Zusammenhalt der Vorformlinge zu unterstützen (z.B. klebende oder schmelzbare Fäden, Folien, Netze, Harzfilme, thermoplastische Fäden oder Folien oder Netze...);
- Die Umformung kann durch Einlegen oder Auflegen (zwischen oder auf die Verstärkungsfaserlagen) von speziellen Membranen, Folien oder Netzen unterstützt und gesteuert werden, wobei diese Membranen, Folien oder Netze lokal einstellbare Dehnbarkeit und Scherbarkeit aufweisen;
- Die Greifer können von der Zielseite aus über der Rahmen fahren, die Fadenenden greifen (abholen) und über den Rahmen ziehen. Die Greifer fahren dabei weiter als bis zum Ende der Bauteilkontur, um die Fadenreserve auf der Zielseite zu erzeugen.
- Die Greifer können individuell bewegt werden;
- Alternativ können sich die beiden gegenüberliegenden Haltestellen eines Rahmens gemeinsam (z.B. an einem Rahmenteil) aufeinander zu bewegen, alle Fadenenden greifen und bei der folgenden Auseinanderbewegung der Haltestellen die Fäden über den Rahmen spannen;
- Alternativ kann der Rahmen selbst elastisch sein und somit die benötigte Nachgiebigkeit beim Halten der Fäden bereitstellen;
- Spezielle Ausführung der Rahmen, der Haltestellen und der Greifer;
- Mehrstufige Formgebung (Primärformung -> Rohgeometrie;
- Sekundärformung -> Fertiggeometrie) sind möglich;
- Die Beheizung und/oder Komprimierung der Vorformlinge dient insbesondere auch zu einer Zwischenfixierung der Lagen und/oder einer verbesserten Handhabung.

### Vorteile:

- Schnelle Produktionszeiten (Automatisierung, zeitgleiches Aufbringen einer oder mehrerer ganzer Lagen, Automatische Formgebung ohne Zwischenhandhabung);
- Verschnittarm, dadurch deutliche Reduktion von Materialkosten;
- Direkte Produktion von Bauteilen aus Faser- und ggf. Matrix- und/oder Hilfsstoffen; keine Halbzeuge nötig; dadurch Kostenreduktion beim Materialeinkauf und der Lagerhaltung;
- Beliebig komplexe Geometrien herstellbar, da keine Beschränkungen bzgl. Scherung oder Dehnung wie bei Halbzeugen bestehen;
- Hohe Reproduzierbarkeit durch Automatisierung.

Weitere Vorteile und Zweckmäßigkeiten ergeben sich aus der Beschreibung von Ausführungsbeispielen anhand der Figuren. Von den Figuren zeigen:
Fig. 1 a) bis e) und a-b) eine schematische Schnittansicht einer Ausführungsform der Vorrichtung und des Verfahrens;

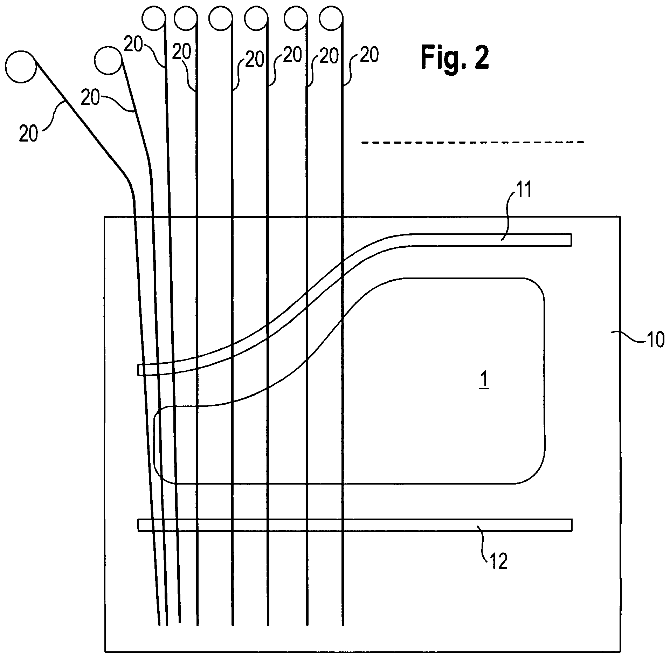

Fig. 2 eine schematische Draufsicht auf eine Ausführungsform der Vorrichtung;

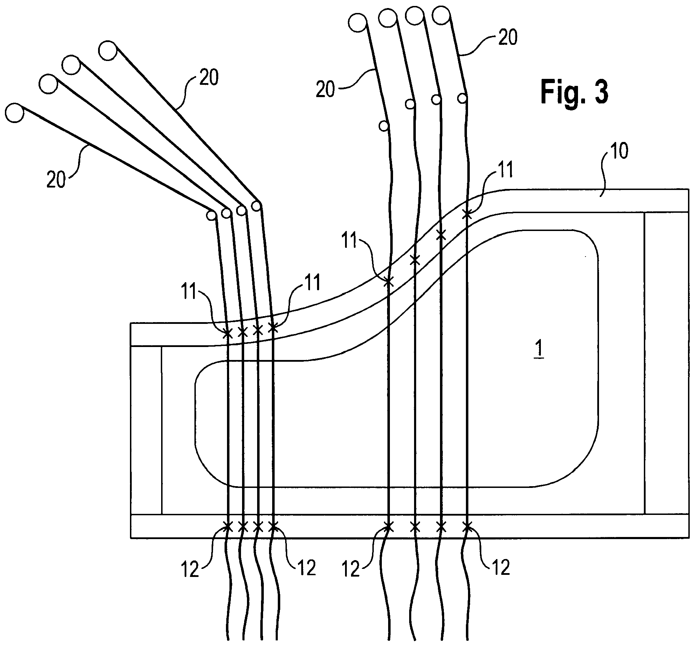

Fig. 3 eine schematische Draufsicht auf eine weitere Ausführungsform der Vorrichtung; und

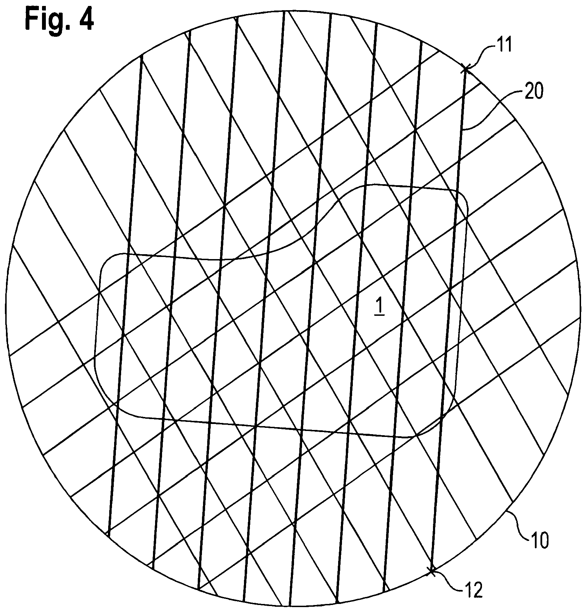

Fig. 4 eine schematische Draufsicht auf eine weitere Ausführungsform der Vorrichtung.

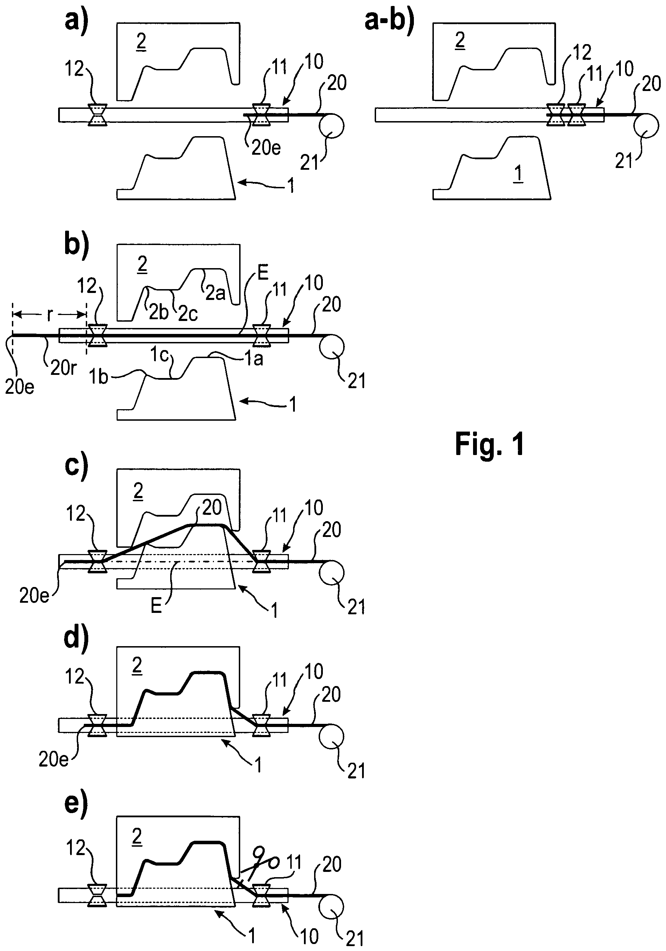

In Fig. 1 a) ist ein Rahmen 10 in einer schematische Schnittansicht gezeigt, mittels dessen Fäden 20, die von Fadenspulen zugeführt werden, in einer Aufspannebene nachgiebig aufgespannt werden können, gezeigt. An dem Rahmen sind Haltevorrichtungen 11, 12 vorgesehen. Bei der gezeigten Ausführungsform sind diese als Greifer 11, 12 ausgeführt, die kraftgesteuert die Fäden 20 durch Klemmung halten und ein kraftgesteuertes Rutschen in der zulassen. Ein Fadenende 20e wird in de Figur 1a) von rechts nach links von der eine lateralen Seite des Rahmens (Spannebene) 10 nach rechts zu der gegenüberliegenden Seite des Rahmens (Spannebene) 10 gezogen und rechts in dem Greifer 11 und links in dem Greifer 12 gehalten (siehe Fig. 1b)). Dabei wird ein Reserveabschnitt 20r des Fadens lateral außerhalb des Greifers 12 vorgesehen, der eine Länge r aufweist. Das Ziehen des Fadens erfolgt entweder mittels einer in Fig. 1 nicht gezeigten Fadenzugvorrichtung oder der Greifer 12 wird, wie in Fig. 1 a-b) gezeigt in Richtung der Fadenrolle bewegt, greift dort den Faden 20 in der Nähe des Fadenendes 20e und zieht diesen dann in die in Fig. 1b) gezeigte Stellung. In Fig. 1 sind eine Positivwerkzeug 1 und ein Negativwerkzeug 2 mit komplementären Vorsprüngen 1a, 1b, 2c und Vertiefungen 2a, 2b, 1c gezeigt. Wie im Vergleich der Fig. 1b) bis 1d) gut zu erkennen ist, werden die Fäden 20, die zunächst in der Aufspannebene aufgespannt sind, durch eine Bewegung des Positivwerkzeugs 1 senkrecht zu der Aufspannebene aus dieser herausgezogen und legen sich an die Kontur des Werkzugs (Werkstückträgers) 1 an. Wie im Vergleich der Fig. 1b) und c) gut zu erkennen ist, wird dabei ein erster Teil der Reservelänge r verbraucht, während der Faden 20 durch die Rutschhalterung (=Greifer 12) gezogen wird. Analog wird von der Seite der Fadenspule durch die Rutschhalterung (=Greifer 11) Faden nachgeführt. Wenn die Negativform 2 in der entgegengesetzten Richtung abgesenkt wird, wie in Fig. 1 d) gezeigt ist, formen die komplementären Vorsprünge 1a, 1b, 2c und Vertiefungen 2a, 2b, 1c den Vorformling, das Bauteil nach Art eines Tiefziehens. Wiederum wird die benötigte zusätzliche Fadenlänge über die Rutschhalterungen zugeführt.

Nachfolgend werden die Fäden 20 in der Nähe der auf Seiten der Fadenspulen 21 befindlichen Greifer 11 abgeschnitten (siehe Fig. 1e)). Optional kann zusätzlich auf der anderen Seite geschnitten werden, obwohl die dort gegebenenfalls noch vorhandene überflüssige Fadenlänge ohnehin verloren ist. Die Schneidvorrichtung ist schematisch durch eine Schere gezeigt.

Die beschriebenen Varianten und speziellen Ausführungsformen können auch bei der beschriebenen schematischen Ausführungsform verwendet werden.

## Patentansprüche

1. Verfahren zum Herstellen von Fasergelegen und/oder Bauteilvorformlingen aus Fasern, mit den Schritten:
a) Spannen einer Mehrzahl von Fäden (20), die Rovings aus Verstärkungsfasern einschließlich Heavy Tows sind, in einer Aufspannebene (E) mittels eines Rahmens mit nachgiebiger Fadenaufspannung derart, dass jeder Faden separat nachgiebig gehalten wird;
b) Bewegen eines Werkstückträgers (1) in einer im Wesentlichen zu der Aufspannebene (E) senkrechten Richtung durch die Aufspannebene (E); und
c) Fixieren der Fäden (20) an dem Werkstückträger (1); und
d) Wiederholen der Schritte a) bis c) zur Ausbildung des Geleges und/oder des Bauteilvorformlings.

2. Verfahren nach Anspruch 1, bei dem
die Fäden (20) am Rand der Aufspannebene (E) derart nachgiebig gehalten werden, dass die Fäden lateral beidseitig der Spannebene nachgiebig so gehalten werden, dass auf wenigstens einer Seite zusätzliche Länge des Fadens nachlieferbar ist.

3. Verfahren nach Anspruch 2, bei dem
jeder Faden nachgiebig auf beiden lateralen Seiten der Aufspannebene (E) gehalten wird.

4. Verfahren nach einem der Ansprüche 1 bis 3, bei dem
in Schritt a) die Mehrzahl von Fäden (20) in mehreren Aufspannebenen (E) gehalten werden und
das Bewegen des Werkstückträgers gemäß Schritt b) gleichzeitig durch die mehreren Aufspannebenen (E) erfolgt.

5. Verfahren nach einem der Ansprüche 1 bis 4, bei dem optional Matrix- oder Hilfsfasern, Folienstreifen oder Streifen von Hilfsmaterialien in Schritt a) zusammen mit der Mehrzahl von Fäden gespannt werden.

6. Vorrichtung zum Herstellen von Fasergelegen und/oder Bauteilvorformlingen aus Fasern, mit
einer Aufspannvorrichtung (10) zum Aufspannen einer Mehrzahl von Fäden (20), die Rovings aus Verstärkungsfasern einschließlich Heavy Tows sind, in einer Aufspannebene (E) mittels eines Rahmens mit nachgiebiger Fadenaufspannung,
einem Werkstückträger (1,2) mit einer dem herzustellenden Gelege und/oder Bauteilvorformling entsprechenden Kontur, der dazu angepasst ist, dass die Fäden eines herzustellenden Geleges und/oder Bauteilvorformlings mittels Vakuum, Nadeln, Adhäsivstoffen, Greifern, Klemmen oder Gefriergreifern an dem Werkstückträger fixierbar sind, und
einer Vorrichtung zum relativen Bewegen der Aufspannvorrichtung (10) und des Werkstückträgers (1,2) derart, dass der Werkstückträger (1, 2) in einer im Wesentlichen zu der Aufspannebene (E) senkrechten Richtung wenigstens teilweise durch die Aufspannebene (E) bewegbar ist, **dadurch gekennzeichnet, dass**
der Rahmen mit nachgiebiger Fadenaufspannung Haltevorrichtungen (11, 12) zum separaten, nachgiebigen Halten der Fäden (20) aufweiset.

7. Vorrichtung nach Anspruch 6, bei der
die Haltevorrichtungen (11, 12) als Greifer zum nachgiebigen Halten der Fäden am Rand der Aufspannebene (E) durch elastisches oder kraftgesteuertes Halten ausgebildet sind.

8. Vorrichtung nach Anspruch 6 oder 7, bei der
die Mehrzahl von Fäden (20) in mehreren Aufspannebenen (E), die in einer im Wesentlichen zu den Aufspannebenen (E) senkrechten Richtung übereinander angeordnet sind, mittels eines oder mehrerer der Rahmen (10) mit nachgiebiger Fadenaufspannung separat und nachgiebig gehalten werden können.

9. Vorrichtung nach Anspruch 8, bei der die Faserorientierungen in den Rahmen (10) unterschiedlich sein können.

10. Vorrichtung nach einem der Ansprüche 6 bis 9, bei der
die Haltevorrichtungen (11, 12) jeweils zum elastischen Halten mit einer Feder und/oder einer Pneumatik oder zum kraftgesteuerten Halten mittels einer ein Rutschen erlaubenden Klemmung und/oder einer gebremsten Führungsrolle und/oder eines Gewichtes ausgebildet sind.

## Claims

1. Method for manufacturing fiber layers and/or component preforms from fibers, comprising the steps of:
a) tensioning a plurality of yarns (20), which are rovings of reinforcement fibers including Heavy Tows, in a tensioning plane (E) by means of a frame with yieldable yarn tensioning such that each yarn is individually held in a yieldable manner;
b) moving a workpiece carrier (1) through the tensioning plane (E) in a direction substantially perpendicular to the tensioning plane (E); and
c) fixing the yarns at the workpiece carrier (1); and
d) repeating the steps (a) to (c) to form the fiber layers and/or the component preform.

2. Method according to claim 1, wherein
the yarns (20) are yieldably held at the edge of the tensioning plane such that the yarns are yieldably held on both laterally opposing sides of the tensioning plane so that additional length of the yarn can be supplied on at least one side.

3. Method according to claim 2, wherein
each yarn is yieldably held on both lateral sides of the tensioning plane (E).

4. Method according to one of claims 1 to 3, wherein
in step (a), the plurality of yarns (20) is held in plural tensioning planes (E) and
the moving of the workpiece carrier (1) according to step (b) is made simultaneously through the plural tensioning planes (E),

5. Method according to one of claims 1 to 4, wherein matrix or auxiliary fibers, foil strips or strips of auxiliary materials are optionally tensioned together with the plurality of yarns in step (a).

6. Device for manufacturing fiber layers and/or component preforms from fibers, including a tensioning device (10) for tensioning a plurality of yarns (20), which are rovings of reinforcement fibers including Heavy Tows, in a tensioning plane (E) by means of a frame with yieldable yarn tensioning,
a workpiece carrier (1,2) with an outer shape corresponding to the layers and/or component preform to be manufactured which is adapted such that the yarns of the layers and/or a component preform to be manufactured can be fixed by means of vacuum, needles, adhesive matter, grippers, clamps or freezing grippers at the workpiece carrier, and a device for moving the tensioning device (10) and the workpiece carrier (1, 2) relative to each other such that the workpiece carrier (1, 2) is movable in a direction substantially perpendicular to the tensioning plane (E) at least partially through the tensioning plane (E),
**characterized in that**
the frame with yieldable yarn tensioning comprises holding devices (11, 12) for separately and yieldably holding the yarns (20).

7. Device according to claim 6, wherein
the holding device (11, 12) are formed as grippers for yieldably holding the yarns at the edge of the tensioning plane (E) through elastic or force-controlled holding.

8. Device according to claim 6 or 7, wherein
the plurality of yarns (20) can be held in plural tensioning planes (E), which are arranged on top of each other in a direction essentially perpendicular to the tensioning planes (E) by means of one or plural of the frames (10) with yieldable yarn tensioning.

9. Device according to claim 8, wherein
the fiber orientations in the frames (10) can be different.

10. Device according to one of claims 6 to 9, wherein
the holding devices (11, 12) are each formed for elastically holding with a spring and/or a pneumatic or for force-controlled holding by means of a sliding-allowing clamping and/or a braked guide roller and/or a weight.

## Revendications

1. Procédé pour la fabrication de non-tissés en fibres et/ou de préformes de pièces en fibres, avec les étapes de :
a) tension d'une pluralité de fils (20), qui sont des rovings en fibres de renfort y compris des Heavy Tows, dans un plan de serrage (E) au moyen d'un cadre avec serrage de fil élastique de telle sorte que chaque fil est maintenu séparément de manière élastique ;
b) déplacement d'un porte-pièce (1) dans une direction sensiblement perpendiculaire au plan de serrage (E) par le plan de serrage (E) ; et
c) fixation des fils (20) sur le porte-pièce (1) ; et
d) répétition des étapes a) à c) pour la réalisation du non-tissé et/ou de la préforme de pièce.

2. Procédé selon la revendication 1, dans lequel
les fils (20) sont maintenus de manière élastique sur le bord du plan de serrage (E) de telle sorte que les fils sont maintenus de manière élastique latéralement des deux côtés du plan de serrage de façon à ce qu'une longueur supplémentaire du fil puisse être fournie plus tard sur au moins un côté.

3. Procédé selon la revendication 2, dans lequel
chaque fil est maintenu de manière élastique sur les deux côtés latéraux du plan de serrage (E).

4. Procédé selon l'une quelconque des revendications 1 à 3, dans lequel
dans l'étape a) la pluralité de fils (20) sont maintenus dans plusieurs plans de serrage (E) et
le déplacement du porte-pièce conformément à l'étape b) se fait en même temps par les plusieurs plans de serrage (E).

5. Procédé selon l'une quelconque des revendications 1 à 4, dans lequel des fibres matricielles ou auxiliaires, des bandes de film ou des bandes de matériaux auxiliaires sont tendues en option dans l'étape a) conjointement avec la pluralité de fils.

6. Dispositif pour la fabrication de non-tissés en fibres et/ou de préformes de pièces en fibres, avec :
un dispositif de serrage (10) pour le serrage d'une pluralité de fils (20), qui sont des rovings en fibres de renfort y compris des Heavy Tows, dans un plan de serrage (E) au moyen d'un cadre avec serrage de fil élastique,
un porte-pièce (1, 2) avec un contour correspondant au non-tissé et/ou à la préforme de pièce à fabriquer, qui est adapté pour que les fils d'un non-tissé et/ou d'une préforme de pièce à fabriquer puissent être fixés au porte-pièce par vide, aiguilles, substances adhésives, préhenseurs, pinces ou préhenseurs par congélation, et
un dispositif pour le déplacement relatif du dispositif de serrage (10) et du porte-pièce (1, 2) de telle sorte que le porte-pièce (1, 2) est déplaçable dans une direction sensiblement perpendiculaire au plan de serrage (E) au moins en partie par le plan de serrage (E), **caractérisé en ce que**
le cadre avec serrage de fil élastique présente des dispositifs de retenue (11, 12) pour le maintien séparé élastique des fils (20).

7. Dispositif selon la revendication 6, dans lequel
les dispositifs de retenue (11, 12) sont réalisés sous forme de préhenseurs pour le maintien élastique des fils sur le bord du plan de serrage (E) par maintien élastique ou commandé par force.

8. Dispositif selon la revendication 6 ou 7, dans lequel
la pluralité de fils (20) peuvent être maintenus séparément et de manière élastique dans plusieurs plans de serrage (E), qui sont disposés l'un au-dessus de l'autre dans une direction sensiblement perpendiculaire aux plans de serrage (E), au moyen d'un ou plusieurs des cadres (10) avec serrage de fil élastique.

9. Dispositif selon la revendication 8, dans lequel les orientations des fibres dans le cadre (10) peuvent être différentes.

10. Dispositif selon l'une quelconque des revendications 6 à 9, dans lequel
les dispositifs de retenue (11, 12) sont réalisés respectivement pour le maintien élastique avec un ressort et/ou un système pneumatique ou pour le maintien commandé par force au moyen d'un pinçage permettant un glissement et/ou d'un galet de guidage freiné et/ou d'un poids.
